# EUROPÄISCHE PATENTSCHRIFT

(11) **EP 1 763 709 B1**
(45) Veröffentlichungstag und Bekanntmachung des Hinweises auf die Patenterteilung: **11.04.2012**
(21) Anmeldenummer: 04738606.5
(22) Anmeldetag: 07.06.2004
(51) Int. Cl.: G05B 19/418

(54) **VERPACKUNGSMASCHINE**
PACKAGING MACHINE
MACHINE D'EMBALLAGE

(43) Veröffentlichungstag der Anmeldung: 21.03.2007
(73) Patentinhaber: ELAU GmbH, 97828 Marktheidenfeld (DE)
(72) Erfinder: FERTIG, Erwin, 97845 Neustadt/Main (DE); CORD, Thomas, 97828 Marktheidenfeld (DE)
(74) Vertreter: Pöhner, Wilfried Anton
(86) Internationale Anmeldenummer: PCT/DE2004/001152
(87) Internationale Veröffentlichungsnummer: WO 2006/000167

(56) Entgegenhaltungen:
- WO-A-2004/030871
- DE-A1- 19 735 942
- US-A1- 2002 097 031
- US-A1- 2003 043 052
- US-B1- 6 658 850

## Beschreibung

Die Erfindung betrifft eine Verpackungsmaschine, ausgestattet mit Sensoren, Aktoren und Antriebssystemen mit Servomotor, einer zentralen Steuereinheit und einem System zur Datenübertragung, wobei die Ist-Werte der Sensoren, Aktoren und Antriebssysteme jeweils in digitaler Form erfasst und unter Verwendung eines Übertragungsprotokolls über das Datenübertragungssystem an die zentrale Steuereinheit übermittelt werden, von dieser ausgewertet und die ermittelten Sollwerte bzw. Steuerbefehle ebenfalls in digitaler Form und unter Verwendung des Übertragungprotokolls von der Steuereinheit über das Datenübertragungssystem an die Aktoren bzw. Antriebe übermittelt werden, sowie das Übertragungsprotokoll zyklisch arbeitet mit kleinen Zykluszeiten, vorzugsweise im Millisekundentakt, eine Synchronisation aller Sensoren, Aktoren, Antriebe mit zeitabhängigen Aktionen vornimmt.

Beim Verpacken von Nahrungsmitteln sind in der Regel eine Vielzahl von Vorgängen erforderlich, wie Zuführen des Verpackungsmaterials oder-behälters, Füllen des Behälters, Schließen des Behälters und Etikettieren der abgepackten Ware. Jeder dieser Vorgänge gliedert sich wiederum in eine Vielzahl von Einzelschriften, die durch unterschiedliche Maschinen oder Maschinenkomponenten ausgeführt werden, wobei alle Einzelschritte zeitlich zu einander synchron ablaufen müssen.

Während früher zur Lösung des Problems Verpackungsmaschinen mit einander verzahnten mechanischen Komponenten eingesetzt wurden, weisen Verpackungsmaschinen nach dem heutigen Stand der Technik eine Vielzahl von "intelligenten" Sensoren, Aktoren und Antrieben auf. Diese Elemente führen die vorgesehenen Aufgaben weitgehend "eigenständig" durch, wobei die Ansteuerung und die Koordination dieser Elemente durch eine zentrale Steuereinheit erfolgt. Dabei findet ein umfangreicher, meist bidirektionaler Datenaustausch zwischen zentraler Steuereinheit und den genannten Elementen statt.

Die Übertragung der Daten erfolgt bei Verpackungsmaschinen nach dem Stand der Technik leitungsgebunden über ein Datenübertragungssystem. Die Leitung bietet zwar eine vergleichsweise hohe Sicherheit gegen Übertragungsfehler, da moderne Verpackungsmaschinen jedoch eine sehr große Anzahl von Sensoren, Aktoren und Antrieben aufweisen, ist mit der Verkabelung dieser Elemente ein hoher Aufwand an Zeit und Material verbunden, wobei das Material nicht nur das Kabel sondern auch große Verteiler- und Schaltschränke umfasst. Darüber hinaus führt die Vielzahl der Kabel häufig zu einem unübersichtlichen Kabelsalat, der sich bei einer Fehlersuche als sehr nachteilig erweist.

Zur Übertragung der Daten und Informationen zwischen Steuereinheit und Sensoren, Aktoren und Antrieben und umgekehrt sind Kommunikationsprotokolle erforderlich, die den Ablauf des Datenaustauschs regeln. Bei Anwendung der Datenübertragung auf den Bereich der Verpackungsmaschinen müssen diese Protokolle eine schnelle und sichere Datenübertragung gewährleisten. Insbesondere bei der Ansteuerung von Antrieben ist es erforderlich, dass das Protokoll die Ist- und Solldaten fehlerfrei und innerhalb von sehr kurzen Zeiten und mit einer hohen zeitlichen Genauigkeit zur Verfügung stellt. Der Durchsatz des Datenübertragungssystems muss um so größer sein, je höher der Automationsgrad der Verpackungsmaschine und dadurch bedingt je höher die Anzahl der Elemente ist, die in den Datenaustausch eingebunden sind.

Aus der DE 197 35 942 ist eine Vorrichtung gattungsgemäßer Art bekannt. Sie zeigt eine Verpackungsmaschine, bei der die Servomotoren von Antriebssystemen mit einer zentralen Steuereinheit drahtgebunden in Verbindung stehen, wobei einerseits Steuerdaten an die Servomotoren gegeben werden und andererseits Absolutgeber der zentralen Steuereinheit Informationen über den einzelnen Servomotor liefern. Der Datenaustausch erfolgt hierbei im Bereich von Millisekunden.

Die US Patentanmeldung US 2002/0097031 offenbart ein Regelungssystem zur Ansteuerung von Servomotoren, welche unter Berücksichtigung unterschiedlicher Einflüsse berechnet werden. Zu diesem Zweck liegt ein Netzwerk vor, bei dem die Signalübertragung drahtgebunden aber ausdrücklich auch drahtlos erfolgen kann.

Vor diesem Hintergrund hat sich die Erfindung die Aufgabe gestellt, eine Verpackungsmaschine anzugeben, die keinerlei Aufwand bei der Verkabelung verursacht, und zudem ermöglicht, bei gleichzeitigem Erhalt der Datensicherheit die Anzahl der Sensoren, Aktoren und Antriebe und damit den Automationsgrad zu erhöhen.

Erfindungsgemäß wird diese Aufgabe dadurch gelöst, dass
- die Datenübertragung zwischen Sensoren (2), Aktoren (3), Antrieben (4) und zentraler Steuereinheit (7) und umgekehrt drahtlos erfolgt,
- das Übertragungsprotokoll die Bereitstellung der Ist-Werte und die ermittelten Sollwerte aller Antriebe (4) in jedem Zyklus durchführt,
- wobei die Genauigkeit der Synchronisation und der Bereitstellung im Mikrosekundenbereich liegt
- wesentliche Informationen redundant gehalten sind
- und Fehler bei der Datenübertragung durch Fehlerkorrekturverfahren, beispielsweise das HDLC-Verfahren, eliminiert werden.

Die Erfindung geht von an sich bekannten Verpackungsmaschinen aus, die mit Sensoren, Aktoren und Antriebssystemen mit Servomotor ausgerüstet sind und über eine zentrale Steuereinheit und ein System zur Datenübertragung verfügen. Im Unterschied zu Maschinen nach dem Stand der Technik erfolgt die Datenübertragung bei der Verpackungsmaschine gemäß vorliegender Erfindung jedoch über ein drahtlos arbeitendes System.

Nach einem Grundgedanken der Erfindung lässt sich hierdurch die normalerweise nötige Verkabelung zwischen den Sensoren, Aktoren und Antrieben und der zentralen Steuereinheit a priori vermeiden. Dies führt in vorteilhafter Weise dazu, dass der Bedarf der Kabeln,

Schaltschränken und somit auch an Platz reduziert und dementsprechend die Übersichtlichkeit erhöht wird. Diese rein äußerlichen Randbedingung lassen sich bereits zu einer Erhöhung der Anzahl von Sensoren, Aktoren und Antrieben nutzen, um damit den Automationsgrad zu erhöhen. Weiterhin wird die Fehlersuche erleichtert, da die unübersichtliche Verkabelung entfällt.

Aufgabe der zentralen Steuereinheit ist es, eine möglichst große Anzahl von Sensoren, Aktoren und Antrieben anzusteuern und zu kontrollieren. Insbesondere müssen die Antriebe zu präzisen Bewegungen veranlaßt werden, wobei die einzelnen Antriebe absolut synchron zueinander laufen müssen. Diese Aufgaben erfordern einen umfangreichen und präzisen Datenaustausch zwischen allen einbezogenen Komponenten, durch den einerseits Sollwerte, wie beispielsweise die Positions- oder Geschwindigkeitsdaten für die Antriebe, zur Verfügung gestellt werden oder umgekehrt Status- und Fehlermeldungen an die zentrale Steuereinheit zurückgemeldet werden.

Die Erfassung der Daten bei vorliegender Erfindung erfolgt wie bei bekannten Verpackungsmaschinen digital, wobei das Protokoll zur Übertragung der Daten abweichend zum Stand der Technik mit kleinen Zykluszeiten, vorzugsweise im Millisekundentakt, arbeitet, eine Synchronisation aller Sensoren, Aktoren, Antriebe vornimmt und die Bereitstellung der Ist-Werte und die ermittelten Sollwerte aller Antriebe in jedem Zyklus durchführt. Dabei liegt die Genauigkeit der Synchronisation und der Bereitstellung im Mikrosekundenbereich. Diese Maßnahmen führen dazu, daß Antriebssysteme mit einem sehr schnellen Zeitverhalten (Dynamik) einsetzbar sind. Außerdem kann die Anzahl der eingesetzten Antriebe erhöht werden. Die vorteilhafte Folge hiervon ist ein erhöhter Automationsgrad der Verpackungsmaschine.

Einem weiteren Merkmal der Erfindung entsprechend werden wesentliche Informationen durch das Datenübertragungsprotokoll redundant gehalten und Fehler bei der Datenübertragung durch Fehlerkorrekturverfahren, beispielsweise das HDLC-Verfahren, eliminiert. Die Fehlerkorrektur ermöglicht es, fehlerhaft übertragene Daten zu erkennen und Maßnahmen für einen unterbrechungsfreien Betrieb zu aktivieren. Diese Maßnahmen können, je nach Art des Fehlers, beispielsweise eine Rückrechnung auf den fehlerfreien Werte umfassen oder ein Ignorieren der fehlerhaften Daten und Wiederholen der Datenübertragung bewirken. Da bei einem drahtlosen Datenübertragungssystem die zu übertragenden Daten prinzipiell mehr Störeinflüssen ausgesetzt sind als bei einer Übertragung in einem abgeschirmten Kabel, wird empfohlen Fehlerkorrekturverfahren vorzusehen. Die Anwendung der Fehlerkorrekturen führt dann dazu, daß die Datensicherheit bei drahtlosen Übertragungssystemen auf dem gleichen Niveau wie bei drahtgebundenen Systemen liegt.

Im Ergebnis führt die vorgeschlagene Lösung zu einer Verpakkungsmaschine, die keinerlei Aufwand bei der Verkabelung verursacht, und bei gleichzeitigem Erhalt der Datensicherheit ermöglicht, die Anzahl der Sensoren, Aktoren und Antriebe und damit den Automationsgrad zu erhöhen.

Bei Verpackungsmaschinen werden sehr komplexe Bewegungsabläufe für die Antriebe benötigt, die eine möglichst ruckfreie Bewegung der Packgüter, Verpackungsmittel und der Maschinenkomponenten sicherstellen. Diese Bewegungsfunktionen der Antriebe können zum Teil durch geeignete mathematische Funktionen vorgegeben werden, wie beispielsweise Sinusfunktionen oder Polynome höheren Grades. Die Bewegungsfunktionen der Antriebe werden in der Steuerung zeitlich diskretisiert (Millisekunden) und durch das Datenübertragungssystem an die Antriebe übermittelt. Gemäß einem Merkmal der Erfindung ist dementsprechend vorgesehen, die Bewegung der Antriebe durch eine Positions- bzw. Geschwindigkeitsregelung, d.h. durch Vorgabe von Positions- bzw. Geschwindigkeitsdaten und der zugehörigen Zeitpunkte, zu steuern und die Steuereinheit oder einen den Antrieben jeweils zugeordnete Regler mit einem Interpolator auszurüsten, welcher die Zeitfunktion der Positions- bzw. Geschwindigkeitsdaten durch eine Interpolation zwischen den von der zentralen Steuereinheit ermittelten Sollwerten erstellt. Die Interpolation ist erforderlich, weil die Zykluszeiten der Regler (Position, Geschwindigkeit, Strom) wesentlich geringer ist, als die Zykluszeit der Datenübertragung an die Antriebe.

Damit ist folgender vorteilhafte Ablauf gegeben: Jeweils zum Zeitpunkt der Datenübertragung nimmt der Regler bzw. der genannte Interpolator den von der Steuereinheit aus dem Ist-Wert ermittelten Sollwert entgegen, berechnet daraus und ggf. aus zurückliegenden Werten unter Anwendung eines vorgegebenen Algorithmus, wie z. B. durch Interpolation, die Zeitfunktion der Positions- bzw. Geschwindigkeitskoordinaten. Die Zeitfunktion in ihrer Gesamtheit stellt sich somit durch diskrete Punkte - die von der Steuereinheit ermittelten Sollwerte - und jeweils daran anschließende Kurvenstücke dar, die durch den Interpolator ermittelt wurden und den Zeitraum zwischen zwei Datenübertragungen überbrücken.

Aus Sicht eines Antriebes ist damit sichergestellt, daß zu jedem Zeitpunkt eine eindeutige Position definiert ist. Da diese Aussage für alle Antriebe der Verpackungsmaschine gilt, ist in Zusammenwirkung mit einer mikrosekundengenauen Synchronisation der einzelnen Antriebe und einer mikrosekundengenauen Bereitstellung der Sollwerte auch für das Gesamtsystem zu jedem Zeitpunkt ein eindeutiges Verhalten festgelegt. Einem Grundgedanken der Erfindung entsprechend gilt somit für das Gesamtsystem ein deterministisches Zeitverhalten. Dieses Zeitverhalten ermöglicht es, eine große Anzahl schneller Antriebe in einer Verpackungsmaschine vorzusehen und mit der vorgesehen Steuereinheit anzusteuern, zu koordinieren und zu kontrollieren.

Bei der Auswahl des drahtlosen Übertragungssystems stehen zwei unterschiedliche Technologien zur Verfügung. Gemäß einem Merkmal der Erfindung werden dementsprechend Funk, vorzugsweise Breitbandfunk, oder Infrarot-Kommunikation vorgeschlagen. Dabei bietet die Infrarottechnik den Vorteil von vergleichsweise kostengünstigen Systemkomponenten und eines lizenzfreien Betriebes erfordert aber jeweils Sichtkontakt zwischen Sender und Empfänger, der in vielen Anwendungsfällen nicht gegeben ist. Von Vorteil bei der Funklösung ist insbesondere die Möglichkeit Breitbandfunk einzusetzen und somit eine Vielzahl von Daten über einen Funkkanal zu übertragen.

In weiterer Ausgestaltung der Erfindung ist vorgesehen, daß die Datenübertragung zwischen der zentralen Steuereinheit und den jeweiligen Sensoren, Aktoren oder Antrieben und in der umgekehrten Richtung jeweils unidirektional oder bidirektional erfolgt. Bei Sensoren und Aktoren findet in der Regel eine unidirektionale Datenübertragung statt; bei Antrieben hingegen wird zur Durchführung des Soll/Ist-Wert-Abgleichs eine bidirektionale Datenübermittlung erforderlich.

Zur Steuerung von Aktoren und insbesondere Servo-Antrieben sind spezielle Steuerungen entwickelt worden, wie beispielsweise die numerischen Steuerungen (NC/CNC) oder die speicherprogrammierbaren Steuerungen (SPS). Die Weiterentwicklung dieser Steuerungen verläuft im Vergleich zu der rasanten Entwicklung im PC-Bereich jedoch vergleichsweise langsam ab. Dies hat dazu geführt, daß der PC aufgrund seiner erreichten hohen Leistungsfähigkeit Einzug in die Automatisierungstechnik gefunden hat. Für den Aufbau der zentralen Steuereinheit bei vorliegender Verpackungsmaschine wird daher die Verwendung von PC-Hardware empfohlen. Neben der hohen Leistungsfähigkeit bringt der Einsatz von PC-Hardware den Vorteil eines optimalen Preis/Leistungsverhältnisses.

Bei Einsatz von PC-Hardware als zentrale Steuereinheit empfiehlt es sich an die zentrale Steuereinheit ein Programmiergerät anzuschließen, aber auch bei anderer Ausführung der zentralen Steuereinheiten ist gemäß einem Merkmal der Erfindung ein solches Gerät vorgesehen. Der Anwender erhält hierdurch die Möglichkeit die Steuerungssoftware für die Sensoren, Aktoren und der Antriebe in eigener Regie herzustellen oder Anpassungen, Änderungen und Tests der vorhandenen Software vorzunehmen. Insbesondere letztere Möglichkeit führt zu einer hohen Flexibilität, beispielsweise dann, wenn die Verpackungsaufgabe modifiziert wird.

Dem Ziel einer möglichst hohen Flexibilität bei Durchführung unterschiedlicher Verpackungsaufgaben gilt auch eine vorteilhafte Weiterbildung der Erfindung. Bei dieser Ausgestaltung ist vorgesehen, daß die Anpassung der Sensoren und/oder Aktoren und/oder Antriebe an die Verpackungsaufgabe durch Parameter erfolgt, die in der Steuereinheit oder in den Sensoren, Aktoren und Antrieben hinterlegt sind. Damit eröffnen sich dem Anwender weitreichende Möglichkeiten, die Verpackungsmaschine für spezielle Aufgaben zu konditionieren. Die Steuerung über Parameter bringt darüber hinaus in die meist sehr komplexen Bewegungsabläufe der Maschine eine gewisse Transparenz. In vorteilhafter Ausgestaltung der Erfindung wird vorgeschlagen, die Parameter durch das Übertragungsprotokoll vorzugeben bzw. zu ändern.

Für ein zuverlässiges Arbeiten des Antriebssystems der Verpakkungsmaschine ist eine sorgfältige Prozessüberwachung unabdingbar. Ziel der Überwachung ist es, einen möglichst weitgehenden unterbrechungsfreien Betrieb sicher zustellen. Zur Lösung dieser Aufgabe gehört es, Abweichungen, Störungen und Fehler im Arbeitsprozess frühzeitig zu erkennen und Maßnahmen, welche die Störungen vermeiden oder den Fehler beheben, einzuleiten. Bei vorliegender Erfindung ist daher vorgesehen, daß die Sensoren und/oder Aktoren und/oder Antriebe Informationen erzeugen und an die Steuereinheit übermitteln, welche zu Diagnosezwecken nutzbar sind. Die Steuereinheit wertet diese Informationen aus und erzeugt bei nicht planmäßigen Betriebszuständen anhand umfangreicher im System hinterlegter Regeln für mögliche Fehlfunktionen geeignete Steuermaßnahmen. Stillstandzeiten der Maschine werden hierdurch wirkungsvoll reduziert bzw. deren Verfügbarkeit gesteigert.

Grundsätzlich ist festzuhalten, dass während eines einzigen Zyklustaktes nicht alle Informationen zu übertragen sind bzw. übertragen werden müssen, sondern es ist denkbar, dass bei der Übermittlung von Daten langsam ablaufender Prozesse die zugehörigen Informationsdaten in zeitlichem Abstand übertragen werden, d.h. dass nur in einzelnen hinreichenden zeitlichen Abstand voneinander aufweisenden Zyklustakten, die Informationen des langsamen Prozesses übertragen werden. In der Praxis reicht es aus, dass die Daten langsamer Informationen, so z. B. nur bei jedem 10. Zyklustakt übertragen werden, d.h. dass in den dazwischen liegenden Takten die Informationen langsamer Prozesse grundsätzlich nicht aufgenommen werden. Es finden sich dort nur noch die Informationen der schnellen Prozesse. Als Beispiele langsamer Prozesse ist die Messung des Lagerzustandes eines Antriebes und/oder die Temperatur eines Antriebes mit Hilfe eines Sensors zu nennen, die keinen raschen Änderungen unterworfen sind. Dennoch sind auch diese langsamen Prozesse von großer Bedeutung, um einerseits die Betriebssicherheit zu gewährleisten, bzw. rechtzeitige Wartungsarbeiten zu ermöglichen. Im Ergebnis erhält man Zyklustakte mit weniger Informationen, nämlich nur die der schnellen Prozesse und solche, die mehr Informationen beinhalten, die also die schnellen und auch die langsamen Prozessdaten umfassen.

Abweichend von dem Vorschlag in jedem Zyklustakt oder in bestimmten, zeitlich beabstandeten Zyklustakten Informationen auszutauschen, geht ein weiterer Hinweis der Erfindung dahin, bestimmte, hier handelt es sich insbesondere um die sehr langsamen, Informationen, nur dann zu übertragen, wenn ein Bedarf hierfür besteht. So werden z. B. Diagnoseinformationen der Datenübertragung bedürfen, wenn ein Diagnosevorgang aufgrund festgestellter Mängel vorgenommen wurde. Hierzu wird vorgeschlagen, das Zeitfenster eines Zyklustaktes derart zu bemessen, dass es zum einen alle zyklischen Informationen aufzunehmen in der Lage ist und darüber hinaus im Zeitfenster eine Restzeit als ungenutzte Zeit verbleibt, die es ermöglicht, bei bedarf zusätzliche Informationen aufzunehmen. Beinhaltet ein Zyklustakt nur die schnellen Informationen, wie sie die Antriebsinformationen der Servomotorik darstellen, verbleiben somit Teile des Zeitfenster ungenutzt. Die demgegenüber langsamen Prozessdaten werden in bestimmten zeitlich fixierten Abständen also dem X-ten Zyklustakt übermittelt. Die demgegenüber noch langsameren Informationen, wie z. B. Diagnoseinformationen, werden willkürlich, d. h. nur dann wenn eine Übertragung erforderlich ist, im Zeitfenster der einzelnen Zyklustakte aufgenommen. Auf diese Art und Weise erfolgt die Übermittlung von Daten mit geringster Priorität.

Zu den geeigneten Steuermaßnahmen gehören insbesondere solche, die eine Inbetriebnahme der Verpackungsmaschine, eine Wiederinbetriebnahme nach einem Störungsfall oder auch das Herunterfahren bei Betriebsunterbrechung, Stromausfall, Ausschalten oder Not-Stop ermöglichen. Gemäß einem Merkmal der Erfindung ist für diese Fälle vorgesehen, daß beim Herunterfahren die Antriebe synchron zueinander abbremsen, während beim Anfahren der Verpakkungsmaschine ein synchrones Beschleunigen der Antriebe erfolgt.

Zur Erleichterung der Fehlerdignose wird desweiteren vorgeschlagen, zusätzlich zur Vor-Ort-Diagnose eine Ferndiagnose per Modem oder Internet vorzusehen. Aus Anwendersicht erbringt dies den Vorteil einer erheblichen Verkürzung der Reaktionszeiten bei in der Maschine aufgetretenen Fehlern, aus Sicht des Maschinenherstellers eine deutliche Reduktion des Serviceinsatzes und der damit verbunden finanziellen Belastung.

Weitere Einzelheiten und Merkmale der Erfindung lassen sich auch dem nachfolgenden Teil der Beschreibung entnehmen. In diesem Teil wird ein Ausführungsbeispiel der vorgeschlagenen Verpakkungsmaschine anhand einer Zeichnung näher erläutert.

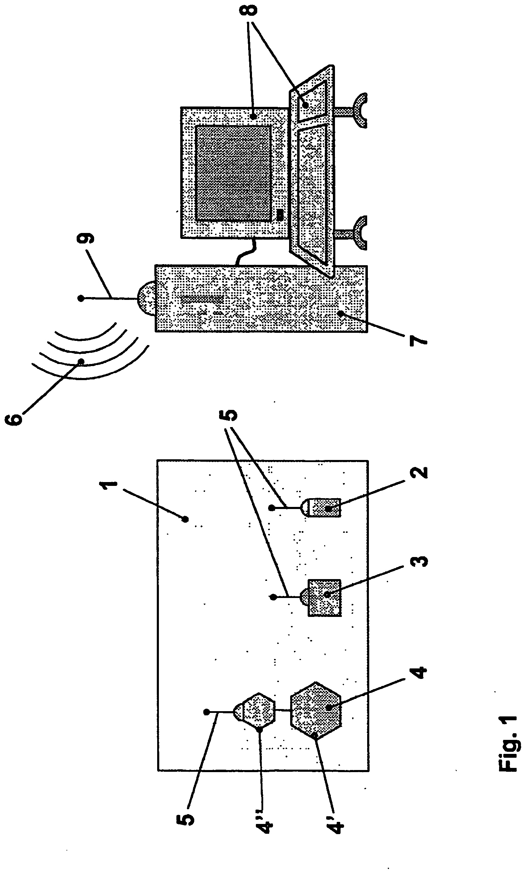

Die Zeichnung zeigt in schematischer Darstellung die wesentlichen Komponenten der vorgeschlagenen Verpackungsmaschine.

Die Verpackungsmaschine 1 ist im linken Bereich der Zeichnung wiedergegeben. Sie enthält Sensoren, Aktoren und Antriebe, die in vorliegender Darstellung durch die Symbole 2, 3, 4 angedeutet sind, wobei der Antrieb 4 sich in den Servomotor 4' und den Regler 4" gliedert. Stellvertretend für die üblicherweise große Anzahl dieser Elemente ist in vorliegender Zeichnung jeweils nur eines dieser Elemente wiedergegeben. Jedes dieser Elemente ist, wie durch die Antennen 5 angedeutet werden soll, an ein drahtloses Datenübertragungssystem angeschlossen, das im vorliegenden Fall durch ein Funksystem 6 realisiert ist.

In der rechten Hälfte der Zeichnung ist die zentrale Steuereinheit 7 und das mit dieser Einheit verbundene Programmiergerät 8 wiedergegeben. Die zentrale Steuereinheit 7 ist, wie durch die Antenne 9 angedeutet, ebenfalls an das drahtlose Datenübertragungssystem 6 angeschlossen. Aufgabe der zentralen Steuereinheit ist es, die Sensoren 2, Aktoren 3 und Antriebe 4 anzusteuern und zu kontrollieren. Der hierfür nötige Datenaustausch erfolgt ausschließlich über das drahtlose Datenübertagungssystem 6, zwischen Steuereinheit 7 und Verpackungsmaschine 1 sind daher keinerlei Datenleitungen vorgesehen. Die ausgetauchten Daten umfassen unter anderem die Sollwerte für die Lagekoordinaten der Antriebe und umgekehrt Status- und Fehlermeldungen von den Sensoren 2 , den Aktoren 3 und den Antrieben 4 an die zentrale Steuereinheit 7. Dabei erfolgt der Datenaustausch zwischen der Steuereinheit 7 und den Aktoren 3 und Antrieben 4 bidirektional, während der Datenaustausch zum Sensor 2 unidirektional ausgelegt ist.

Der Regler 4" enthält unter anderem einen (nicht dargestellten) Interpolator, welcher die Zeitfunktion der Lagekoordinaten des Antriebs durch eine Interpolation zwischen den von der zentralen Steuereinheit 7 ermittelten Sollwerten errechnet. Dabei wird der jeweils zum Übertragungszeitpunkt entgegengenommene Sollwert mit zurückliegenden Sollwerten abgeglichen und mit Hilfe von geeigneten Algorithmen der Bewegungsablauf ermittelt. Die Bewegung der Antriebe folgt diesem errechneten Bewegungsablauf während der Zeit zwischen zwei Datenübertragungen.

Das Programmiergerät 8 gibt dem Anwender die Möglichkeit, Einfluß auf die Steuerung und Kontrolle der Abläufe in der Verpackungsmaschine zu nehmen. Insbesondere erhält er hierdurch die Möglichkeit, die Steuerungssoftware für die Sensoren 2, Aktoren 3 und der Antriebe 4 in eigener Regie herzustellen oder Anpassungen, Änderungen und Tests der vorhandenen Software vorzunehmen.

## Patentansprüche

1. Verpackungsmaschine ausgestattet
- mit Sensoren, Aktoren und Antriebssystemen mit Servomotor,
- einer zentralen Steuereinheit
- und einem System zur Datenübertragung,
- wobei die Ist-Werte der Sensoren, Aktoren und Antriebssysteme
- jeweils in digitaler Form erfasst
- und unter Verwendung eines Übertragungsprotokolls über das Datenübertragungssystem an die zentrale Steuereinheit übermittelt werden,
- von dieser ausgewertet
- und die ermittelten Sollwerte bzw. Steuerbefehle
- ebenfalls in digitaler Form
- und unter Verwendung des Übertragungsprotokolls von der Steuereinheit über das Datenübertragungssystem an die Aktoren bzw. Antriebe übermittelt werden, sowie
- das Übertragungsprotokoll
- die Bereitstellung der Ist-Werte und die ermittelten Sollwerte aller Antriebe (4) in jedem Zyklus durchführt,
- zyklisch arbeitet mit kleinen Zykluszeiten, vorzugsweise im Millisekundentakt,
- eine Synchronisation aller Sensoren (2), Aktoren (3), Antriebe (4) mit zeitabhängigen Aktionen vornimmt und,
- die Datenübertragung zwischen Sensoren (2), Aktoren (3), Antrieben (4) und zentraler Steuereinheit (7) und umgekehrt drahtlos erfolgt,
**dadurch gekennzeichnet, dass**
- wobei die Genauigkeit der Synchronisation und der Bereitstellung der Ist-Werte und die ermittelten Sollwerte aller Antriebe (4) im Mikrosekundenbereich liegt und
- wesentliche Informationen redundant gehalten sind und
- Fehler bei der Datenübertragung durch Fehlerkorrekturverfahren, beispielsweise das HDLC-Verfahren, eliminiert werden.

2. Verpackungsmaschine nach Anspruch 1, **dadurch gekennzeichnet, daß**
- die Steuerung der Antriebe (4) durch Vorgabe von Positions- oder Geschwindigkeitsdaten und der zugehörigen Zeitpunkte erfolgt,
- die Steuereinheit (7) oder ein den Antrieben (4) jeweils zugeordnete Regler (4") einen Interpolator aufweist,
- welcher die Zeitfunktion der Positions- und Geschwindigkeitsdaten durch eine Interpolation zwischen den genannten ermittelten Sollwerten der Antriebe erstellt.

3. Verpackungsmaschine nach Anspruch 1 oder 2, **dadurch gekennzeichnet, daß**
- die drahtlose Datenübertragung (6) durch Funk, vorzugsweise Breitbandfunk, oder Infrarot-Kommunikation realisiert ist.

4. Verpackungsmaschine nach einem der Ansprüche 1 - 3, **dadurch gekennzeichnet, daß**
- die Datenübertragung zwischen der zentralen Steuereinheit (7) und den jeweiligen Sensoren (2), Aktoren (3) oder Antrieben (4) und in der umgekehrten Richtung jeweils unidirektional oder bidirektional erfolgt.

5. Verpackungsmaschine nach einem der Ansprüche 1 - 4, **dadurch gekennzeichnet, daß**
- die zentrale Steuereinheit (7) aus PC-Hardware aufgebaut ist.

6. Verpackungsmaschine nach einem der Ansprüche 1 - 5, **dadurch gekennzeichnet, daß**
- an die zentrale Steuereinheit (7) ein Programmiergerät (8) angeschlossen ist.

7. Verpackungsmaschine nach einem der Ansprüche 1 - 6, **dadurch gekennzeichnet, daß**
- die Anpassung der Sensoren (2) und/oder Aktoren (3) und/oder Antriebe (4) an die Verpackungsaufgabe durch Parameter erfolgt,
- die in der Steuereinheit (7) oder jeweils in den Sensoren (2) bzw. Aktoren (3) bzw. Antrieben (4) hinterlegt sind.

8. Verpackungsmaschine nach Anspruch 7, **dadurch gekennzeichnet, daß**
- die Parameter durch das Übertragungsprotokoll vorgebbar bzw. änderbar sind.

9. Verpackungsmaschine nach einem der Ansprüche 1 - 8, **dadurch gekennzeichnet, daß**
- die Sensoren (2) und/oder Aktoren (3) und/oder Antriebe (4)
- Informationen erzeugen und an die Steuereinheit (7) übermitteln,
- welche zu Diagnosezwecken nutzbar sind,
- die Steuereinheit (7)
- die genannten Informationen auswertet
- und bei Störungen im Arbeitsprozeß nach programmierten Vorgaben geeignete Steuermaßnahmen erzeugt.

10. Verpackungsmaschine nach einem der vorhergehenden Ansprüche, **dadurch gekennzeichnet, dass** die Prozessdaten langsam ablaufender Prozesse nur in einzelnen zeitlich beabstandeten Zyklustakten aufgenommen werden, sodass in den dazwischen liegenden Zyklustakten nur die Daten der schnellen Prozesse enthalten sind.

11. Verpackungsmaschine nach einem der vorhergehenden Ansprüche, **dadurch gekennzeichnet, dass** jedem Zyklustakt ein Zeitfenster zugeordnet ist, das trotz der Übermittlung vorgenannter Daten eine (ungenutzte) Restzeit umfasst, die zur Übertragung optionaler Informationen nutzbar ist.

12. Verpackungsmaschine nach Anspruch 9-11, **dadurch gekennzeichnet, daß**
- die Steuermaßnahmen beim Herunterfahren im Fehlerfall, bei Betriebsunterbrechung, Stromausfall, Ausschalten oder Not-Stop ein synchrones Abbremsen und beim Anfahren der Verpackungsmaschine ein synchrones Beschleunigen der Antriebe bewirken.

13. Verpackungsmaschine nach einem der Ansprüche 1 - 12, **dadurch gekennzeichnet, daß**
- die Fehlerdiagnose vor Ort oder als Ferndiagnose per Modem erfolgt.

## Claims

1. Packaging machine equipped
- with sensors, actuators and drive systems, comprising a servo motor,
- a central control unit
- and a system for data transmission,
- the actual values of the sensors, actuators and drive systems
- being recorded in digital form in each case
- and transferred with the use of a transmission protocol via the data transmission system to the central control unit,
- evaluated by the latter
- and the determined setpoint values or control commands
- being also transmitted in digital form
- and with the use of the transmission protocol from the control system via the data transmission system to the actuators or drives,
- the data transmission between sensors (2), actuators (3), drives (4) and central control unit (7) and vice versa takes place wirelessly,
**characterised in that**
- the accuracy of the synchronisation and the provision of the actual values and the determined setpoint values of all drives (4) lies within the microsecond range.
- essential information is kept redundant
- and errors in the data transmission are eliminated by means of error correction processes, for example the HDLC process.

2. Packaging machine according to claim 1, **characterised in that**
- the control of the drives (4) takes place by specifying position or velocity data and the associated points In times,
- the control unit (7) or a controller (4") assigned to each of the drives (4) has, in each case, an interpolator assigned to it
- which generates the time function of the position and velocity data by means of interpolation between the aforementioned determined setpoint values of the drives.

3. Packaging machine according to claim 1 or 2, **characterised in that**
- the wireless data transmission (6) can be realised by radio, preferably broadband radio, or infrared communication.

4. Packaging machine according to one of claims 1-3, **characterised in that**
- the data transmission between the central control unit (7) and the respective sensors (2), actuators (3) or drives (4) and in the opposite direction takes place in each case unidirectionally or bidirectionally.

5. Packaging machine according to one of claims 1-4, **characterised in that**
- the central control unit (7) is built up from PC hardware.

6. Packaging machine according to one of claims 1-5, **characterised in that**
- a programming unit (8) is connected to the central control unit (7).

7. Packaging machine according to one of claims 1-6, **characterised in that**
- the adaptation of the sensors (2) and/or actuators (3) and/or drives (4) to the packaging function is performed by means of parameters
- which are stored in the control unit (7) or in the sensors (2) or actuators (3), or drives (4) respectively.

8. Packaging machine according to claim 7, **characterised in that**
- the parameters can be set or modified by means of the transmission protocol.

9. Packaging machine according to one of claims 1-8, **characterised in that**
- the sensors (2) and/or actuators (3) and/or drives (4) generate information and transmit it to the control unit (7),
- which can be used for diagnosis purposes,
- the control unit (7)
- evaluating the aforesaid information
- and, in the event of disturbances in the operation, generating suitable control measures according to programmed settings.

10. Packaging machine according to one of the preceding claims, **characterised in that** the process data of slowly running processes are only recorded in individual time-spaced cycle pulses, so that only the data of the fast processes are contained in the cycle pulses lying in between.

11. Packaging machine according to one of the preceding claims, **characterised in that** assigned to each cycle pulse is a time window, which, despite the transmission of the aforementioned data, comprises an (unused) residual time, which can be used for transmitting optional information.

12. Packaging machine according to claims 9-11, **characterised in that**
- on shutdown in the event of a fault, on operation interrupts, power failure, switching off or emergency stop, the control measures effect a synchronous braking and, on start-up of the packaging machine, effect a synchronous acceleration of the drives.

13. Packaging machine according to one of claims 1-12, **characterised in that**
- the fault diagnosis takes place locally or as remote diagnosis via modem.

## Revendications

1. Machine d'emballage équipée
• de capteurs, d'acteurs et de systèmes d'entraînement avec servomoteur,
• d'une unité de commande centrale,
• et d'un système de transmission des données,
• sachant que les valeurs réelles des capteurs, acteurs et systèmes d'entraînement,
• sont à chaque fois enregistrées sous forme numérique,
• sont transmises à l'unité de commande centrale par l'intermédiaire du système de transmission de données et en utilisant un protocole de transmission,
• sont évaluées par cette dernière,
• les valeurs de consigne et ordres de commande étant
• également transmises sous forme numérique
• et en utilisant le protocole de transmission de l'unité de commande, via le système de transmission, aux acteurs et aux entraînements,
• le protocole de transmission
• exécutant la mise à disposition des valeurs réelles et des valeurs de consigne détectées de tous les entraînements (4) dans chaque cycle,
• fonctionnant de façon cyclique avec des temps de cycle courts, de préférence à la cadence d'une milliseconde,
• procédant à une synchronisation de tous les capteurs (2), acteurs (3), entraînements (4) par des actions dépendant du temps,
• la transmission des données entre les capteurs (2), les acteurs (3), les entraînements (4) et une unité de commande centrale (7) et inversement s'effectuant sans fil,
**caractérisée par le fait que**
• sachant que l'exactitude de la synchronisation et de la mise à disposition des valeurs réelles et les valeurs de consigne détectées de tous les entraînements (4) se situent dans la plage des millisecondes,
• les informations essentielles étant tenues redondantes et
• les erreurs étant éliminées, lors de la transmission des données, par un procédé de correction d'erreurs, par exemple le procédé HDLC.

2. Machine d'emballage selon la revendication 1, **caractérisée par le fait**
• **que** la commande des entraînements (4) se fait par consigne des données de positionnement ou de vitesse et des points temporels correspondants
• l'unité de commande (7) ou un des régulateurs (4") attribué à chaque fois aux entraînements (4) présente un interpolateur,
• qui réalise la fonction temporelle des données de position et de vitesse par une interpolation entre les valeurs de consigne enregistrées des entraînements.

3. Machine d'emballage selon la revendication 1 ou 2, **caractérisée par le fait que**
• la transmission sans fil (6) est réalisée par radio, de préférence radio bande large, ou par communication infrarouge.

4. Machine d'emballage selon une des revendications 1 à 3, **caractérisée par le fait**
• **que** la transmission des données entre l'unité centrale de commande (7) et les différents capteurs (2), acteurs (3) ou entraînements (4) et dans le sens inverse est à chaque fois réalisée de façon unidirectionnelle ou bidirectionnelle.

5. Machine d'emballage selon une des revendications 1 à 4, **caractérisée par le fait**
• **que** l'unité de commande centrale (7) est construite sur un matériel de microordinateur.

6. Machine d'emballage selon une ou plusieurs des revendications 1 à 5, **caractérisée par le fait**
• **qu'**un appareil de de programmation (8) est raccordé à l'unité centrale de commande (7).

7. Machine d'emballage selon une ou plusieurs des revendications 1 à 6, **caractérisée par le fait**
• **que** l'adaptation des capteurs (2) et/ou acteurs (3) et/ou entraînements (4) est effectuée sur la réception d'emballage grâce à des paramètres,
• qui sont préenregistrés dans l'unité de commande (7) ou bien à chaque fois dans les capteurs (2) resp. acteurs (3) resp. entraînements (4).

8. Machine d'emballage selon la revendication 7, **caractérisée par le fait**
• **que** les paramètres peuvent être prescrits ou modifiés par le protocole de transmission.

9. Machine d'emballage selon une ou plusieurs des revendications 1 à 8, **caractérisée par le fait**
• **que** les capteurs (2) et/ou acteurs (3) et/ou entraînements (4)
• génèrent des informations et les transmettent à l'unité de commande (7),
• lesquelles peuvent être utilisées à des fins de diagnostic,
• l'unité de commande (7)
• évaluant les informations nommées,
• et générant des mesures de commande adaptées en cas de pannes au cours du processus de travail en fonction de consignes programmées.

10. Machine d'emballage selon une des revendications précédentes, **caractérisée par le fait que** les données de process fonctionnant lentement sont enregistrées seulement dans des fréquences de cycles individuels espacées dans le temps, de façon à ce que seules les données des process rapides soient contenues dans les fréquences de cycle comprises dans les temps intermédiaires.

11. Machine d'emballage selon une des revendications précédentes, **caractérisée par le fait qu'**une fenêtre temporelle est attribuée à chaque fréquence de cycle, qui comprend, en dépit de la transmission des données précédemment nommées, un temps résiduel qui peut être utilisé de façon optimale pour transmettre des informations en option.

12. Machine d'emballage selon les revendications 9 à 11, **caractérisée par le fait**
• **que** les mesures de commande provoquent, en cas d'arrêt consécutif à une erreur, en cas d'interruption du service, de panne électrique, d'arrêt ou d'arrêt d'urgence, un freinage synchrone et lors du démarrage de la machine d'emballage, une accélération synchrone des entraînements.

13. Machine d'emballage selon une des revendications 1 à 12, **caractérisée par le fait**
• **que** le diagnostic des erreurs a lieu sur place ou sous forme de télédiagnostic par modem.
